# EUROPEAN PATENT SPECIFICATION

(11) **EP 2 904 334 B1**
(45) Date of publication and mention of the grant of the patent: **03.10.2018**
(21) Application number: 13844335.3
(22) Date of filing: 02.10.2013
(51) Int. Cl.: F24D 5/00, F24F 5/00, F24S 20/00

(54) **SOLAR AIR HEATING / COOLING SYSTEM**
SOLARLUFTERWÄRMUNGS-/KÜHLSYSTEM
SYSTÈME DE CHAUFFAGE/REFROIDISSEMENT D'AIR SOLAIRE

(30) Priority: 02.10.2012 NZ 60250712
(43) Date of publication of application: 12.08.2015
(60) Divisional application: 18189379.3
(73) Proprietor: Solarjoule IP Holdings Limited, Mt Eden, Auckland (NZ)
(72) Inventor: COULTER, Grace, Hamilton 3204 (NZ)
(74) Representative: Lapienis, Juozas
(86) International application number: PCT/NZ2013/000185
(87) International publication number: WO 2014/054954

(56) References cited:
- WO-A1-85/00212
- WO-A1-2008/022372
- WO-A2-2009/142475
- CA-A1- 1 082 544
- CA-A1- 2 393 273
- CA-A1- 2 546 825
- DE-A1- 4 218 709
- JP-A- S57 101 251
- JP-A- 2003 161 534
- US-A- 4 227 515
- US-A1- 2010 199 975
- US-A1- 2011 021 133
- US-A1- 2011 269 087
- US-A1- 2011 277 749
- US-A1- 2011 277 749

## Description

### Field of Invention

The invention relates to a solar air heating / cooling / ventilation system and/or a solar heat collector / heat exchanger for use in such a system.

### Background to the Invention

The use of solar energy as a source of energy for human needs is growing. However the limited sun-facing surfaces in condensed living areas leads to a need for increased efficiency and spatial economy of systems that use solar energy, for example those used for heated or cooled ventilation, water or photovoltaic (PV) or wind energy generation.

Solar air heating and cooling systems have been used for ventilating buildings but also in commercial settings, for example, for drying produce. The SolarWall system from Canada draws air through an unglazed sun-facing perforated aluminium wall into commercial, industrial or apartment buildings. This type of solar air heater comes under the category of transpired solar air collector, with wide applications such as drying crops, manufacturing and assembly plants where there are high ventilation requirements, stratified ceiling heat, and often negative pressure in buildings. A hybrid version has included the use of photovoltaic capacity in front of solar air heaters which was found to enhance the performance of PVs by reducing over-heating.

Some systems are used in more residential settings like the glazed insulated flat plate single-pass panels of Grammer Solar (also based in Canada) and come in various rectangular sizes that can be interlocked to form a larger area and a longer channel of air. These systems can bring in either fresh air and/or recirculate warm stale air.

Other examples of solar heating/cooling systems include do-it-yourself systems that use, for example, drink cans arranged end to end lined up in rows or snaking pipes within glazed insulated frames mounted on walls, roofs and in some cases windows.

Another example is the uninsulated glazed type like SolarVenti (from New Zealand) that supplies air to a panel through many hundreds of small holes on the backside of the panel with internal PV capacity to run a fan.

European patent publication no. 2310760 describes a solar air heater combined with a heat recovery system having counter flow air along channel separations running perpendicular to the front wall. The system uses fresh air, reclaimed air from the building or the stored heat from air passing under the building. Inefficiencies in this system occur where air flow is restricted and where air is in direct contact with parts of the system that are difficult to clean.

Financial benefits result when solar energy uses can be combined, especially when one can enhance the performance of the other. For example, heat storage in the form of Phase-Change Materials (PCMs) can result in a more even distribution of heated or cooled air in a solar air heating / ventilation system. This helps to supply solar heated air later in the day when more is typically needed. It can also help to prevent any PV panels present in the system from over-heating. Bearing all this in mind, it is desirable for any solar air heating / ventilation system that channels air to be adaptive for use in combination with other solar energy uses.

For example, an experimental study conducted on double pass solar air heater with thermal energy storage in the form of PCMs and published in the Journal of King Said University and Engineering Sciences found that PCMs gave a clear boost of heat energy in the time after 4pm for three hours.

PCT publication no. 85/00212 describes a flat plate, unidirectional solar air heater designed to store PCMs. However this system does not provide flexibility enabling it to be used in a number of modes such as for heating in the winter and cooling in the summer.

Canadian patent no. 1082544 describes the use of a honeycomb structure as an effective means to trap heat between a solar collector plate and a transparent wall to improve thermal efficiency. Tests were carried out as to the effectiveness of bonding the honeycomb-like structure to the underneath of the transparent wall in order to direct radiation to the absorbing element and to prevent air flow being directed towards the front transparent wall. In this patent, the air flow passes through an absorbent collector element comprising of a porous opaque material with, in most cases, air being in contact with the honey-comb structure. The internal components of the collector are liable to being soiled from air flow, which affects transparency and therefore efficiency, and the design makes the collector difficult to clean.

Solar energy is harnessed on a grand scale in the form of solar chimney power plants. Large greenhouse roofed collectors, located at the base of a chimney, sometimes hundreds of meters high, generate electricity by means of an updraft or convection (chimney effect). This airflow drives wind turbines inside or at the base of the chimney. For example, a tower in Jinshawan in Inner Mongolia, China with collection area intended to cover over 200 hectares, absorbs heat from the hot sand under glass covers. Using the greenhouse effect, hot air flows up the chimney and generates power by turning the turbine inside the chimney. PCT publication no. WO 2008/022372 describes a similar device for generating electricity from solar power using the solar chimney effect. US patent publication no. 2011/021133 describes air flow via a trombe wall to a turbine using solar chimney effect as a means of heating, cooling and ventilating.

The commonality in all types of solar air heaters is that they capture solar insolation via an absorbing medium and then heat air. They have wide use potential for drying crops, glass houses, desalination plants, commercial, industrial, residential settings, etc. The challenge is to increase efficiency, both for the short term and long term duration. Solar air heaters may measure well in efficiency in the short term, but clog up from continuous air flow rendering them inefficient in the not so long term. For example, the area above the absorber may be warmer than the area below the absorber (Experimental Study on double pass solar air heaters with thermal energy storage, Journal of King Said University Engineering Sciences). Therefore, air passing between the transparent front wall and the absorber plate would maximise the uptake of heat in the short term, but may quickly diminish the transmission of heat and thus efficiency through soiling of the underside of the glazing.

Collector efficiency of solar air heaters depends also on the rate of fan flow. A reduction of air flow leads to maximising air temperature rise at the outlet but this is at the expense of solar air heating system efficiency. The desirable air flow depends on such factors as the outside air temperature differential, efficiency of solar air heaters to extract heat from the absorber, impeded air flow within the solar air heater, other means to preheat/precool the air on entry such as by heat recovery, etc. Most solar air heaters fall within the range of 40 to 70% efficiency.

Experiments have been carried out by Omojaro and Aldabbagh on the efficiency of single versus double pass arrangements using the same air source. It was found that efficiency increases with air mass flow rate. Efficiency also increases when it is a double pass system. The maximum efficiency difference between the single and double pass air heater was 59.62% and 63.74%, respectively for air mass flow rate of .038kg/s. These factors can be considered when designing improved solar air heating technology.

Canadian patent no. 2393273 describes one solar air heating system which endeavours to maximise efficiency by using cut segments of a pipe bent inwards to form a fin to create turbulence in the channel inside the pipe. However, this system results in the flow inside the pipe being interrupted and pressurised as a result. The interruption to the flow restricts the volume of air passing through the pipe and therefore the amount of air that can be heated. These fins may also be very difficult to clean.

Economic efficiency can be achieved by a roof-integrated solar air heating system. An economic analysis was carried out by Sreekumar and found that a roof-integrated system to be efficient and economically viable and this was backed by an experiment to dry pineapples. It is therefore desirable for a solar air heating system to be designed in a manner that enables it to be able to be roof-integrated or integrated into any part of a building.

A study was carried out by Hammou and Lacroix on a hybrid thermal energy storage system using phase change materials for managing simultaneously the storage of heat from solar and electric energy. The results were a 32% reduction in electrical consumption for space heating. This is significant when one considers that the stored heat was released during peak periods when 90% of electricity is consumed.

US 2011/277749 A1 discloses a solar collector for use in a ventilation system according to the preamble of claim 1.

DE 42 18 709 A1 discloses a solar collector which uses an absorber plate to exchange heat between an incoming fresh air channel and an outgoing air channel. The air channels are substantially open and do not include means for creating turbulence.

JP 2003 161534 A discloses a mass-producible thin and lightweight glazing collector comprising a reflector having a high condensing ratio, a heat collecting pipe provided with a turbulence promoter, and a heat insulating material. The all components are put in a thin glazing vacuumed or sealedly filled with an inert gas having low thermal conductivity.

### Object of the Invention

It is an object of the invention to provide an improved solar air heating / cooling / ventilation system.

Alternatively, it is an object to provide an improved solar heat collector or heat exchanger.

Alternatively, it is an object of the invention to address one or more of the aforementioned problems associated with the prior art.

Alternatively, it is an object of the invention to at least provide the public with a useful choice.

### Summary of the Invention

According to a first aspect of the invention, there is provided a solar heat collector for use in a ventilation system, the collector comprising:
a plurality of air channels;
a top panel positioned above the air channels to define a solar energy absorption space, the air channels being in thermal communication with the solar energy absorption space; and
means for creating turbulence of air flow inside the air channels, the means for creating turbulence comprising a helical fin extending along each channel in a longitudinal direction and comprises one or more protrusions on an inside surface of the channels, the one or more protrusions extending longitudinally along a length of the channels.

Preferably, the air channels comprise a plurality of upper air channels and a plurality of lower air channels configured to exchange heat energy with the plurality of upper heat channels, the lower air channels positioned underneath the upper air channels and in thermal communication therewith.

Preferably, the upper and lower air channels are configured to channel air in opposing directions.

Preferably, the solar heat collector comprises a sealed housing in which the upper air channels and lower air channels are contained, an upper surface of the housing comprising the top panel.

According to a second aspect of the invention, there is provided a solar air heating/cooling system for a building, the system comprising:
the solar heat collector of the first aspect of the invention;
a first air exhaust conduit fluidly connecting an upper end of the upper air channels to the outside air;
a first interior air conduit fluidly connecting the upper end of the upper air channels and the building interior;
an air entry conduit fluidly connecting a lower end of the upper air channels and the outside air;
means for driving air through the first interior air conduit towards the building interior;
first flow control means configured to selectively block the first air exhaust conduit; and
second flow control means configured to selectively block the first interior air conduit,
wherein the first flow control means is closed when the second flow control means is open, and vice versa.

It will be understood that the labels used in relation to the different conduits are used for the purposes of differentiating the different conduits and are not limiting to the position or function of the conduit. For example "interior conduit" refers to a conduit fluidly connected to the building interior and the term does not require the conduit itself to be located in the interior.

It will be understood that the term "building" means any structure having a roof and walls and containing an interior space. In terms of the present invention, the term is intended to be interpreted broadly and may encompass not just structures that are commonly known as buildings but any other structure that can be ventilated. Nonlimiting examples of structures that are included within the meaning of "building" as used herein are: glasshouse, greenhouse, crop store, barn, factory, warehouse, plant, and the like.

Preferably, the system further comprises:
a second interior air conduit fluidly connecting an upper end of the lower air channel and the building interior;
a second air exhaust conduit fluidly connecting a lower end of the lower air channel and the outside air; and
means for driving air through the second interior air conduit away from the building interior.

Preferably, the system comprises:
a third interior air conduit fluidly connecting the lower end of the upper air channels and the building interior;
third flow control means configured to selectively block the air entry conduit; and
fourth flow control means configured to selectively block the third interior air conduit,
wherein the third flow control means is closed when the fourth flow control means is open, and vice versa.

Preferably, the system comprises a wind energy generator positioned in the first air exhaust conduit.

According to a third aspect of the invention, there is provided a solar-powered ventilation system for ventilating a building comprising:
the solar energy collector of the first aspect of the invention;
an air exhaust conduit fluidly connected to the upper end of the collector air channels;
a first air entry conduit fluidly connecting the lower end of the collector air channels and the building interior;
a second air entry conduit fluidly connecting the lower end of the collector air channels to the outside air; and
flow control means configured to selectively block the fluid connection of the first and second air entry conduit to the collector air channels.

Preferably, the ventilation system comprises a temperature sensor configured to communicate with the flow control means and to cause the flow control means to block the first air entry conduit when one or more threshold temperatures in the building interior is/are reached.

Preferably, the system comprises one or more pressure sensors configured to communicate with the flow control means to control the flow control means based on one or more detected pressures in the conduits and/or in the building interior.

Preferably, the system comprises a wind energy generator positioned in the air exhaust conduit.

Further aspects of the invention, which should be considered in all its novel aspects, will become apparent to those skilled in the art upon reading of the following description which provides at least one example of a practical application of the invention.

### Brief Description of the Drawings

One or more embodiments of the invention will be described below by way of example only, and without intending to be limiting, with reference to the following drawings, in which:
- Figure 1: is a plan view illustration of a solar heat collector or heat exchanger according to one embodiment of the invention;
- Figure 2: is a bottom view illustration of the solar heat collector of Figure 1;
- Figure 3: is a transverse cross-sectional view illustration across the air channels of the solar heat collector of Figure 1;
- Figure 4: is a longitudinal cross-sectional view illustration in the direction of the air channels of the solar heat collector of Figure 1;
- Figure 5: is a magnified view illustration of the region of the solar heat collector of Figure 4 marked C;
- Figure 6: is a magnified view illustration of the region of the solar heat collector of Figure 4 marked D;
- Figure 7: is an isometric, cross-sectional view illustration of the solar heat collector of Figure 1;
- Figure 8: is a cross-sectional cutaway illustration of air flows in the collector of Figure 1;
- Figure 9: is a schematic illustration of a solar air heating and cooling system for a building according to one embodiment of the invention;
- Figure 10: is an illustration of the system of Figure 9 operating in 'winter solar heating' mode;
- Figure 11: is an illustration of the system of Figure 9 operating in 'winter reclaimed heat' mode;
- Figure 12: is an illustration of the system of Figure 9 operating in 'summer solar cooling' mode;
- Figure 13: is an illustration of the system of Figure 9 operating in 'summer heater cooling' mode; and
- Figure 14: is an illustration of the system of Figure 9 operating in 'summer non-solar cooling' mode.

### Detailed Description of Preferred Embodiments of the Invention

The invention generally relates to a system for using solar energy to ventilate a space, particularly the interior of a building, although other structures may also be ventilated such as crop stores, desalination plants, glass houses and power generation plants. The system can operate in different modes so that solar energy is used to heat or cool the space, as required. Part of the system is a solar heat collector, which absorbs available solar energy.

### Solar heat collector

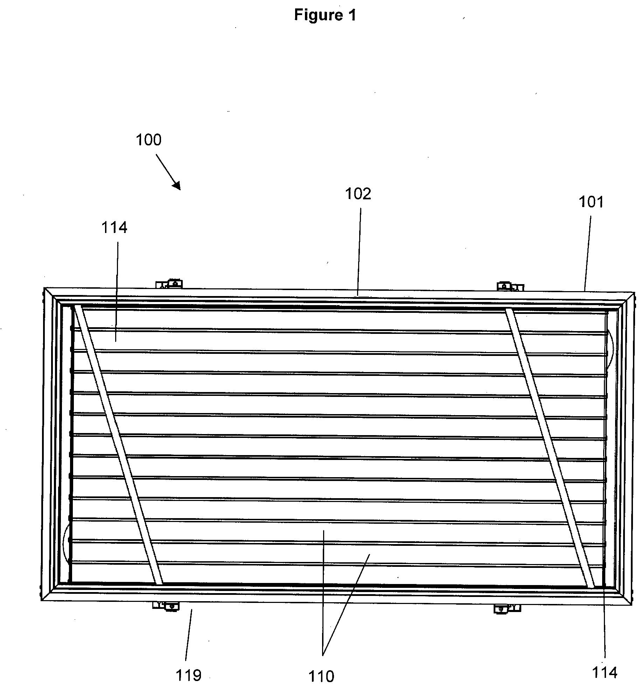

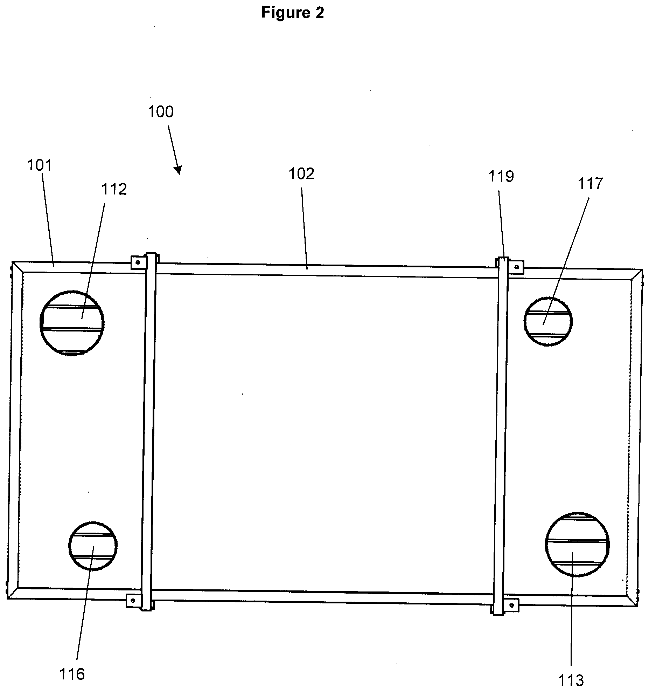

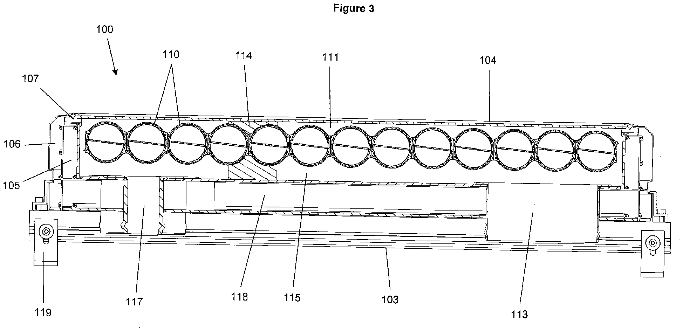

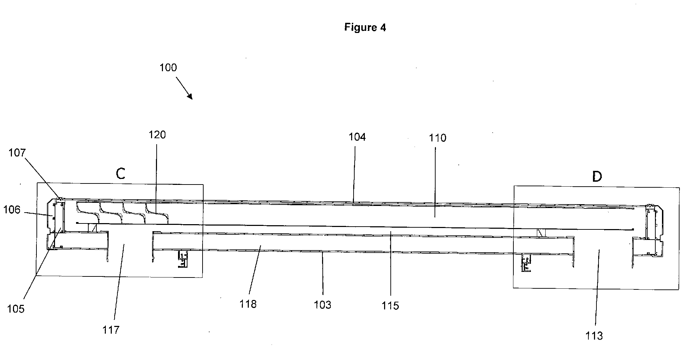

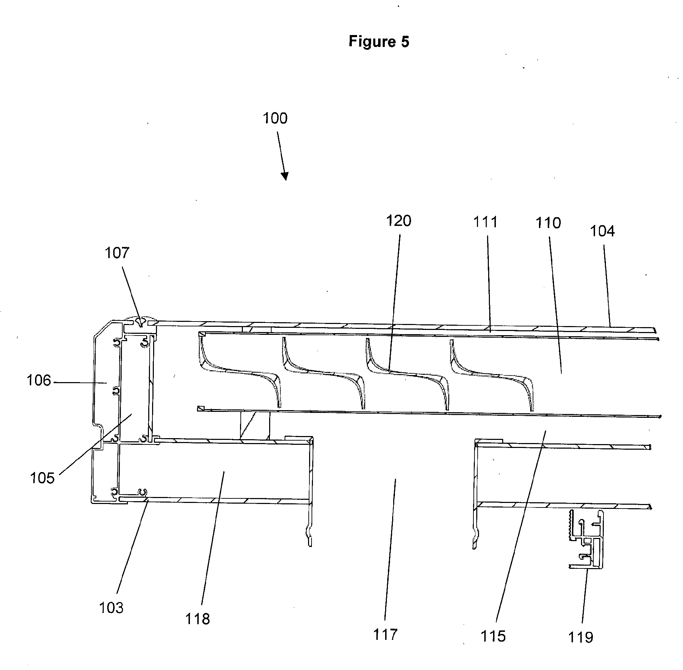

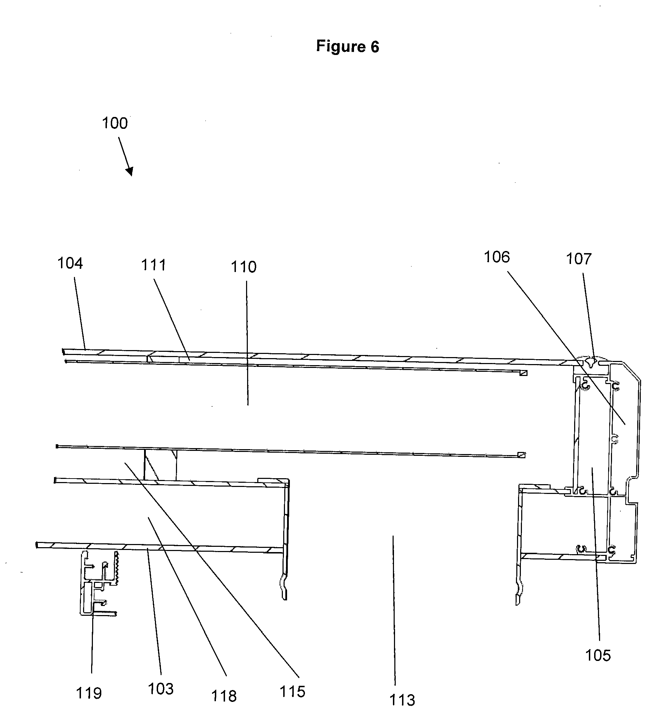

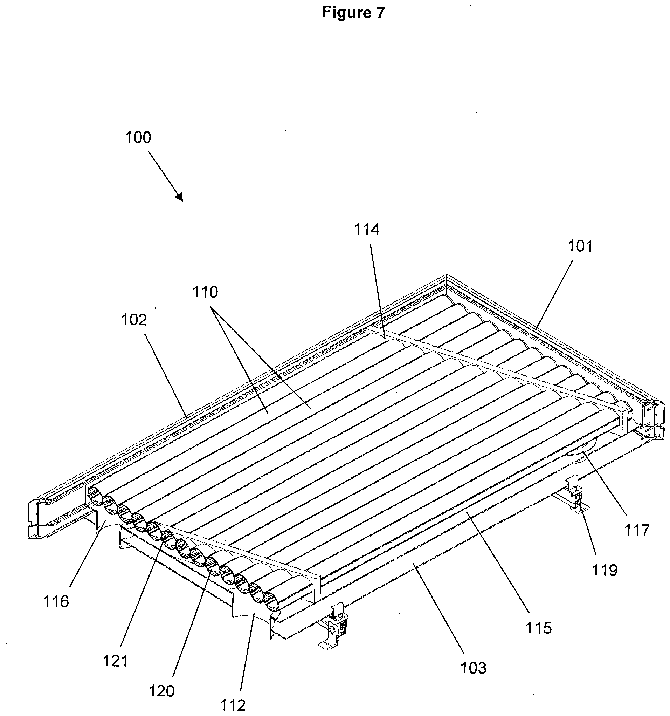

Figures 1-7 illustrate a solar heat collector or heat exchanger 100 according to one embodiment of the invention. Figures 1 and 2 are plan and bottom views respectively. Figure 3 is a transverse cross-sectional view across the air channels and Figure 4 is a longitudinal cross-sectional view in the direction of the air channels. Figures 5 and 6 are magnified views of the regions of Figure 4 marked C and D respectively. Figure 7 is an isometric, cross-sectional view. Like references are used to refer to like parts throughout Figures 1-7.

Solar heat collector 100 comprises an outer housing 101 within which the other components are housed. Outer housing 101 comprises a series of interconnected sidewalls 102, a base 103 and a top panel 104. The sidewalls are preferably designed to minimise heat transmission through the walls. For example, sidewalls 102 are formed from extrusions of material that define an air gap 106 and a region 105 in which insulation may be held. The insulation region may be at least 20mm thick to reduce heat transmission. In some embodiments, the outer part of the housing 101 is formed from aluminium, with inner parts formed of a thermally insulating material to minimise heat loss from the inside of the collector to the aluminium frame.

Top panel 104 is transparent to permit solar radiation to pass through it and heat the space below. Solar energy gains may be enabled by a choice of glass such as low iron, ultra-clear prismatic glass. Since any dirt on panel 104 could affect its transparency, and therefore the amount of solar energy able to be absorbed by the collector, the panel 104 is able to be opened so it can be periodically cleaned if ever required. Seals 107 are provided between the sidewalls 102 and the top panel 104 to ensure the inside of the housing 101 is hermetically sealed. The seals may be made of a thermally insulating material such as EPDM rubber. The housing 101 may be able to be opened in other ways in other embodiments of the invention, for example by opening one of the ends of the housing so that easy access to the inside of the channels is possible. In embodiments of the invention in which the collector is integrated into the building structure, the housing may be able to be opened from the interior of the building for ease of access. For example, a collector integrated into a roof may be able to be accessed and serviced from inside the roof cavity.

Inside housing 101 are a plurality of pipes 110 defining channels through which air can flow. The pipes 110 are arranged adjacent to one another and, in the embodiment shown, are parallel and lie in a plane. Pipes in other embodiments may be arranged differently, for example to define a curve or in a fan-lie arrangement, as may be required to suit the installation position on a building. In between pipes 110 and top panel 104 is a space 111. Air in space 111 absorbs solar energy passing through the panel 104 and is heated.

The pipes are made from a thermally conductive material, such as aluminium (which has a high transmissive capacity), so that the air flowing through pipes 110 is in thermal communication with the air in space 111 and heat energy is able to be transferred between them. For example, the heat of air in space 111 that has been heated by the sun can be conducted through the pipe material to heat the air in the pipes. Channel wall thickness also plays a part in efficiency of heat transfer to/from the medium within the channel. Wall thickness may be kept to a minimum, ideally less than 1.6 mm, within the necessary compromises governed by manufacturing processes, type of materials and structural strength.

The pipes 110 may be connected together by a suitable connection mechanism, for example by interlocking members on the sides of the pipes. In one embodiment of the invention, adjacent pipes are configured to join together by sliding a male member on the side of one pipe longitudinally into a female member in the side of the adjacent pipe. Alternatively, the pipes may be hooked together or bonded with adhesive. This helps strengthen and align the array of pipes. In one embodiment, a low-cost version of the pipe array can be formed by fastening or bonding two sheets of corrugated iron together, with the channels formed by opposing valleys.

The upper surface of the pipe array is corrugated by virtue of the curved upper shape of the pipes 110. This gives the pipes a large upper surface area, increasing the amount of solar energy absorbed directly by the pipes, therefore increasing the amount of heating of the air flowing through the pipes. The curved upper surface of the pipes 110 enables the solar collector to be aligned to maximise the amount of time that solar energy is perpendicularly incident on the pipes. Solar energy absorption may also be increased if the pipes 110 are a dark colour and have a matt, roughened finish.

Underneath pipes 110 is positioned a means for exchanging heat energy with the upper air channels 110. In one embodiment, the heat exchange means comprises means for recovering heat from a building on which the collector 100 is installed. In the embodiment of Figures 1-7 the housing defines another air space 115. Air space 115 is also in thermal communication with the air in the channels inside pipes 110 by virtue of the thermal conductivity of the pipes 110. Heat can therefore be transferred between the air space 115 and the channels. In other embodiments of the invention, space 115 may comprise a second series of channels, each in thermal communication with one or more of the channels in pipes 110.

Diagonal members 114 receive and support the pipes 110 in position above the base of the housing to define the air space 115.

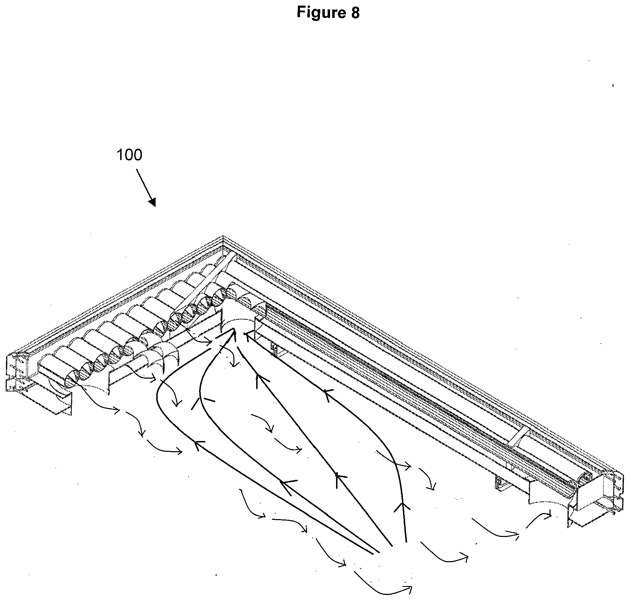

The base of housing 101 comprises a number of openings or ducts 112, 113, 116 and 117 with two openings proximate one end of the collector and two openings proximate the other end. One opening at each end, in the embodiment shown openings 112 and 113, is fluidly connected to pipes 110 and allow air to exit or enter the housing (depending on the direction of flow) and pass through the pipes 110. One opening at each end, in the embodiment shown openings 116 and 117, is fluidly connected to space 115 underneath the pipes 110 and allow air to exit or enter the housing (depending on the direction of flow) and pass through space 115 generally in the longitudinal direction of the collector 100 (i.e. parallel to the direction of the pipes 110). The positioning of openings 116 and 117 diagonally across from each other also creates a component of air flow in the perpendicular direction, which may additionally assist heat transfer between the upper and lower regions of the collector. Figure 8 illustrates the direction of air flow in a cross-sectional cut away illustration of the collector 100.

The diagonal members 114 are used to separate the interior of the housing into fluidly separate sections so that the pipes 110 and space 115, while in thermal communication, are fluidly unconnected. The diagonal members 114 are positioned to pass between the openings at each end of the collector, i.e. one diagonal member passes between opening 112 and opening 116, and another diagonal member passes between opening 113 and opening 117. For example, air entering opening 112 is blocked from entering space 115 by diagonal member 114 and instead flows upwards into the end opening of the pipes 110 and through the channels therein. Air entering opening 116 is blocked from moving upwards into pipes 110 by diagonal member 114 and instead flows along space 115 and out of opening 117. Diagonal members 114 are preferably constructed from materials of low thermal conductivity to reduce unwanted heat loss to the exterior of the collector, for example plastics, glass or latex.

Openings 116 and 117 may be positioned diagonally across from one another to promote the flow of air across the full width of the collector, thus increasing the amount of thermal transfer between pipes 110 and space 115. In some embodiments, a baffle is placed across space 115 to encourage disbursement of air across the width of the collector.

In some embodiments, the lower surface of the space 115, i.e. the upper surface of base 103 interfacing with space 115, may be corrugated. The corrugations may be perpendicularly aligned with the corrugations on the bottom of pipes 110. A study by Gao et al (Gao W, Lin W, Liu T, Xia C. Analytical and experimental studies on the thermal performance of cross-corrugated and flat-plate solar air heater. Applied Energy 2007: 84: 425-41) has shown superior thermal performance with this set up. However the corrugations on the lower surface of space 115 may also be aligned with the corrugations on the bottom of the pipes 110. In such an embodiment the air flow would cross both corrugations and heat would be transferred effectively. This arrangement may also make cleaning of the interior of the collector easier.

This and other studies have indicated that a corrugated top to a solar heater increases thermal performance by up to 11%. In some embodiments, the upper surface of top plate 104 may therefore be corrugated, either from transparent material or otherwise.

While the length of the collector and the fluid flow channels therein may differ in different embodiments of the invention, some embodiments take advantage of the findings of some recent studies that have found higher efficiencies can be gained in solar air heaters having channel lengths of 1.5-2.5m, or less than 3m.

Base 103 of collector 100 may comprise an insulating region 118. Mounting means 119 on the bottom of base 103 enable the collector 100 to be installed in a desired location, for example on the roof of a building. Alternatively, the collector may be able to be mounted vertically on a wall.

### Turbulence structure

Pipes 110 have a shape or configuration to increase turbulence of air flow inside them, or they comprise structures having this effect. In the embodiment of the invention shown in Figures 1-7, two mechanisms increase turbulence as will now be described. In other embodiments, only one such mechanism may be used and, in still other embodiments, other means for creating turbulence may be present.

Inside pipes 110 are positioned helical fins 120 extending along the longitudinal direction of the channels. Turbulent flow is induced by the fins projecting from the internal channel walls to create a unidirectional flow that absorbs or releases heat as it spirals around the inside of the walls of the channels. The corkscrew-type blade may not be as long as the channel; shorter fins would still provoke rotation in the air. The circular symmetry of the channel and fins create turbulent mixing of the air in a manner that promotes equal transfer of heat to/from above and below the pipes 110.

Fins 120 may be separate components able to be inserted and removed from pipes 110. This allows them to be easily cleaned as required. In some embodiments, one end of the collector housing may be able to be opened so that the helical fins can be easily withdrawn for cleaning purposes, and the channels can be easily cleaned as well. Separate components may also enable ease of manufacture as the pipes and spiral fins can be made separately.

On the inner surface of pipes 110 are small protrusions 121 running longitudinally along the length of the pipes 110. These further promote air turbulence in the pipes. Other structures such as teeth-like protrusions, or any other way to roughen the surface of the inside of the channels may also be used. Along with helical fins 120 these protrusions increase fluid turbulence in the pipes.

Increased turbulence is known to increase the amount of heat transfer into or out of a fluid medium. Turbulence-promoting structures inside pipes 110 therefore increase heat transfer between pipes 110 and space 111, and between pipes 110 and space 115. Increased heat transfer increases the efficiency of the system, whether it is used for heating or cooling ventilation, reclaiming or trapping heat. Heat loss out of the collector to the outside, such as through re-radiation from the front panel, is also reduced by rapid transfer of heat within the collector.

It may be preferable for the means for increasing turbulence of air flow in the air flow channels of a collector according to the present invention to do so in a manner that substantially does not impede the flow of air through the channels. By minimally impeding the flow of air, the rate of air flow through the pipes 110 is maximised, increasing the volume of air capable of being heated or cooled in a given period of time.

Fluid mechanics theory may be applied to determine the size and number of channels to increase heat transfer. For example, a calculation of Reynold's number may be used to determine preferred diameter and number of channels for efficient turbulent heat transfer. In one such calculation, 11 channels, each of diameter 65mm with a flow rate of 700m³/h gives a Reynold's number of 22,083. A Reynold's number of 4000 is deemed to be the lower limit of turbulent flow, so pipes containing flow with a Reynold's number above this figure may be desirable.

### Roof-integrated collector

In one embodiment of the invention, the collector is integrated into a building structure. For example, instead of the collector being mounted on a roof, the collector is integrated into the roof itself. For example, on a house with corrugated iron or steel roofing, the top panel of the collector may be formed from a transparent panel of corrugated material integrated into the roof. This may be aesthetically more appealing and minimise the spatial impact of the solar collector.

In another embodiment, a collector could be integrated into a building by using a section of corrugated roofing to define the upper portion of air flow channels in the collector, with another section of roofing fixed below to form the lower portion of the air flow channels. A surface-mounted transparent top panel may be used to define a sealed air space above the channels to define a heat absorption space, as in previously described embodiments, to increase heat absorption and efficiency. In order to weather-tight the channel array in such an embodiment, the transparent top panel may be tucked into a raised ridge structure at the top end and supported and sealed around the edges with corrugated eave fillers and other fillers on the sides. Alternatively a transparent structure may be mounted up and over the roof ridge.

In another embodiment, the collector may be able to be positioned under a roof window that is vented at the top. Such use of existing building features may help to reduce the costs of installation as well as saving space.

### Solar air heating and cooling system

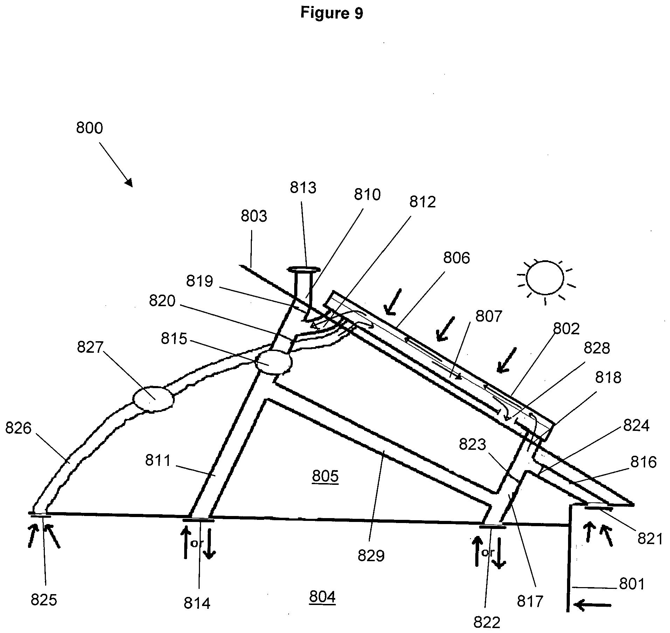

Figure 9 is a schematic illustration of a solar air heating and cooling system 800 for a building 801 according to one embodiment of the invention. Building 801 has an interior 804 and a roof 803 defining a roof space 805.

System 800 comprises a collector 802 mounted on top of roof 803 in an angled position generally facing the position of the sun such that one end of the collector is higher than the other. The collector 802 comprises one or more upper air channels 806 and one or more lower air channels 807 fluidly unconnected from one another. The upper and lower air channels are preferably parallel to each other and oriented such that one end of the channels is higher than the other end. Upper air channels 807 receive solar energy, which heats the air therein. Lower air channels 807 are positioned below upper air channels 806 and are consequently shielded from solar radiation by the upper air channels. The collector 802 is configured such that lower air channels 807 are in thermal communication with the upper air channels 806, i.e. heat energy can transfer between the air passing through the two channels or sets of channels.

The upper and lower ends of both the upper and lower channels connect to openings through which air may flow to enter or exit the channels.

Collector 802 may be a collector of the type described above with reference to Figures 1-7. In another embodiment of the invention, the collector may be integrated or embedded into the roof.

The openings in the ends of the upper and lower channels are connected to a series of conduits that create the system 800 shown in Figure 9. The conduit connections of exemplary system 800 will now be described, although it will be clear to the skilled addressee that other configurations of conduit connections may be used in other embodiments of the invention that maintain the fluid connections between conduits, even if the location of the connections differ between embodiments.

Connected to the upper opening of upper air channels 806 is an air exhaust conduit 810 and an interior air conduit 811. In the embodiment shown in Figure 9, exhaust conduit 810 and interior air conduit 811 are both fluidly connected to an intermediate conduit 812 via a conduit junction, although in other embodiments no intermediate conduit may be present. Exhaust conduit 810 opens to the outside air or atmosphere, for example through cowl 813 that may be used to decrease the backflow down the exhaust conduit 810. The other end of interior conduit 811 is fluidly connected to the building interior via an opening 814. A fan 815, or any other means for driving fluid, is positioned to drive air along the conduit 811 in the direction of the building interior. Flow control means in the form of dampers 819 and 820 are operable to selectively block the air exhaust conduit 810 and interior air conduit 811 respectively. The operation of the dampers will be explained further below. Other devices able to block or control the flow of fluid through a conduit may alternatively be used.

Connected to the lower opening of upper air channels 806 is an air entry conduit 816 and, preferably, another interior air conduit 817. Air entry conduit 816 and interior air conduit 817 may be both fluidly connected to an intermediate conduit 818 via a conduit junction, as shown in Figure 9.Entry conduit 816 is fluidly connected to the outside air, for example via an opening 821 in the soffit of the building 801. Interior conduit 817 may be fluidly connected to the building interior 804 via opening 822. Openings 822 and 814 may be located in different parts of the building 801, for example different rooms. In an alternative embodiment, openings 822 and 814 may be the same opening. Flow control means, again preferably in the form of dampers 823 and 824, are operable to selectively block the flow of air along the interior air conduit 817 and the entry conduit 816, respectively.

The upper end of the lower air channel(s) 807 of collector 802 is fluidly connected to the building interior 804 via opening 825 and interior air conduit 826. A fan 827 or other air driving means is able to drive air along conduit 826 in the direction of the collector 802. The lower end of the lower air channel(s) 807 is fluidly connected to an air exhaust conduit 828, which is connected to the outside air. In the embodiment shown in Figure 9, exhaust conduit 828 comprises an opening in the underside of the collector 802.

An air conduit 829 may fluidly connect interior air conduit 811 and interior air conduit 817.

### Operation of solar air heating and cooling system

The operation of the solar air heating and cooling system 800 of Figure 9 will now be described according to one embodiment of the invention. Several modes of operation will be described. It will be understood that solar air heating and cooling systems of other embodiments of the invention may be able to operate in any one or more of the described modes, and the invention is not necessarily limited to a system that can operate in all of the modes.

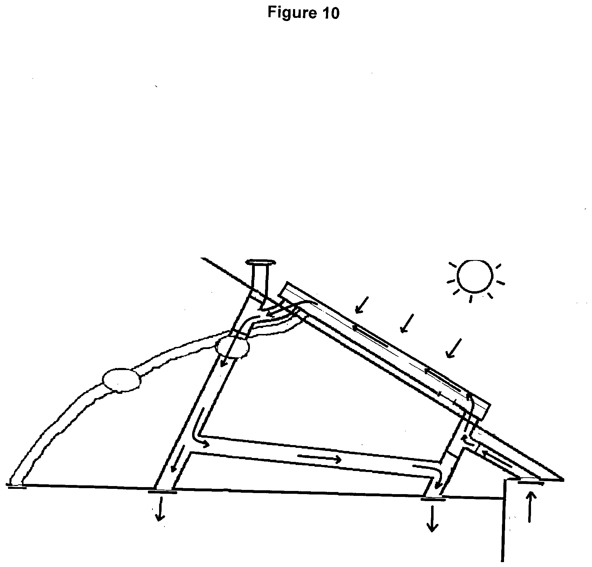

Figure 10 is an illustration of the system operating in 'winter solar heating' mode. The modes of the system will be named in this manner for convenience only. The names are not limiting to the invention or the manner in which it is used. In 'winter solar heating' mode, fan 815 is on while fan 827 is off. Dampers 820 and 824 are open (i.e. they allow air to pass) while dampers 819 and 823 are closed. Fan 815 acts to draw outside air through entry conduit 816 and through the upper channels 806 of the collector 802. Solar radiation incident on the collector 802 causes the air to be heated while passing through the collector. The fan then drives air into the building interior 804 through conduits 811 and 829 and their respective openings.

In this mode, the system 800 acts as a positive pressure heating / ventilation (PPV) system, driving solar heated air into the building interior. This has advantages of many existing PPV systems in which warm, stale air in the roof space is driven into the building interior because these suffer from the risk of smoke from fires in the roof space being driven into the interior. In the present system, only fresh, exterior air is driven to the interior.

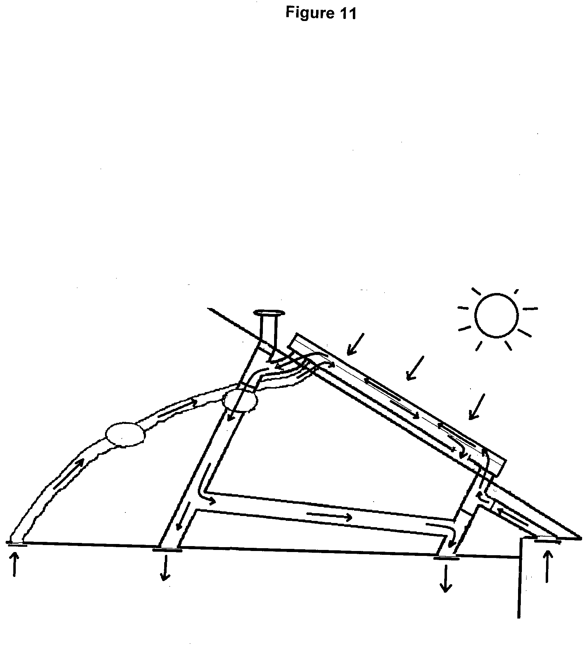

Figure 11 is an illustration of the system operating in 'winter reclaimed heat' mode. In this mode, both fans 815 and 827 are on. Dampers 820 and 824 are open while dampers 819 and 823 are closed. Fan 815 draws fresh air from the exterior through the collector 802 where it is heated by the sun (where solar energy is available) and driven inside, in the same manner as the 'winter solar heating' mode shown in Figure 10. Additionally, preheated air from the building interior 804 is drawn into interior conduit 826 by fan 827. This air is driven through the lower channel 807 of the collector where its heat is transferred to the fresh air passing through the upper channels 806 of the collector.

In this mode, system 800 acts as a balanced pressure ventilation system. The heat in the preheated air passing through the collector adds to the heating of the fresh air in the upper channels of the collector, thus reducing heat energy losses from the building interior 804. Operating in this mode, the system is able to conserve heat in the building while still providing fresh air ventilation even if the sun is not shining.

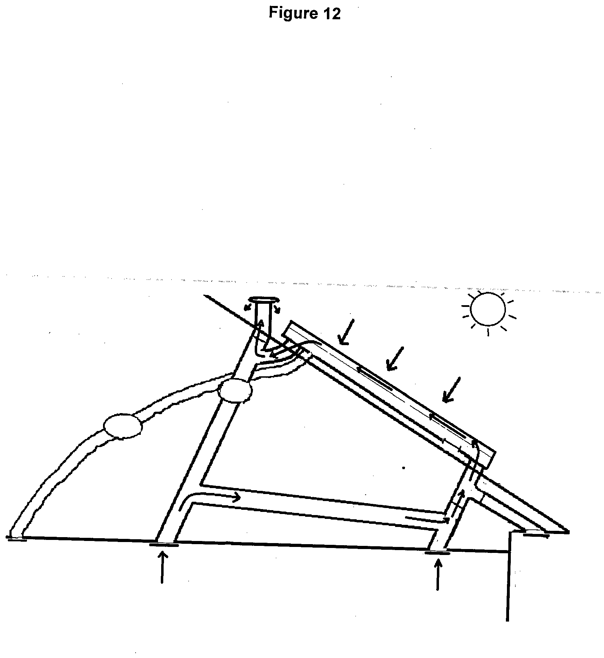

Figure 12 is an illustration of the system 800 operating in 'summer solar cooling' mode. In this mode, both fans 815 and 827 are off. Dampers 819 and 823 are open, while dampers 820 and 824 are closed. The sun heats the air in the upper channels 806 of the collector 802. This causes the air to warm and rise, drawing air upwards through the system. Air in the building interior 804 is drawn up through the conduits 811 and 817, through the upper channel 806 of the collector and to the outside air through exhaust conduit 810 and cowl 813. This mode takes advantage of passive solar heating in the manner of a solar chimney to draw warm air out of the building interior, creating a negative pressure. This causes fresh, cool air to be drawn into the building (for example through windows and doors), causing the building to be cooled and ventilated.

The present invention does not depend, however, on trickle venting from within the building. Modern buildings are increasingly well insulated and do not allow outside air to penetrate when it is closed up. When this is the case, damper 824 can open, allowing the solar air heater to cool down with outside fresh air. Air would either escape out of the system, for example, via a cowl 813, a vent built into a duct at the top of a roof window or under some type of roof ridge cover. The option to draw air from another source may not only be helpful to cool down the solar collector when it is starved of air from within the dwelling but also allows other means of cooling in the building to continue (e.g. heat pump).

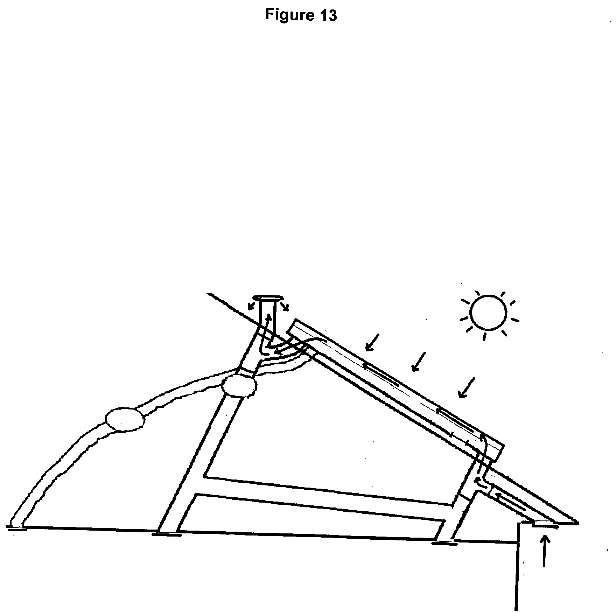

Figure 13 is an illustration of the system 800 operating in 'summer heater cooling' mode. In this mode, both fans 815 and 827 are off. Dampers 819 and 824 are open, while dampers 820 and 823 are closed. The sun heats the air in the upper channels 806 of the collector 802. This causes the air to warm and rise, drawing air upwards through the system. Fresh outside air is drawn up through entry conduit 816, through the upper channel 806 of the collector and to the outside air through exhaust conduit 810 and cowl 813. This mode again takes advantage of passive solar heating in the manner of a solar chimney, but this time draws cool fresh air through the collector. This mode may be useful to cool the solar air heater, particularly if the house is unoccupied and the system is not operating in full. Cooling of the solar air heater may be desired if other components, for example photovoltaic cells, are used in conjunction with the solar air heating system and those components need to be prevented from overheating.

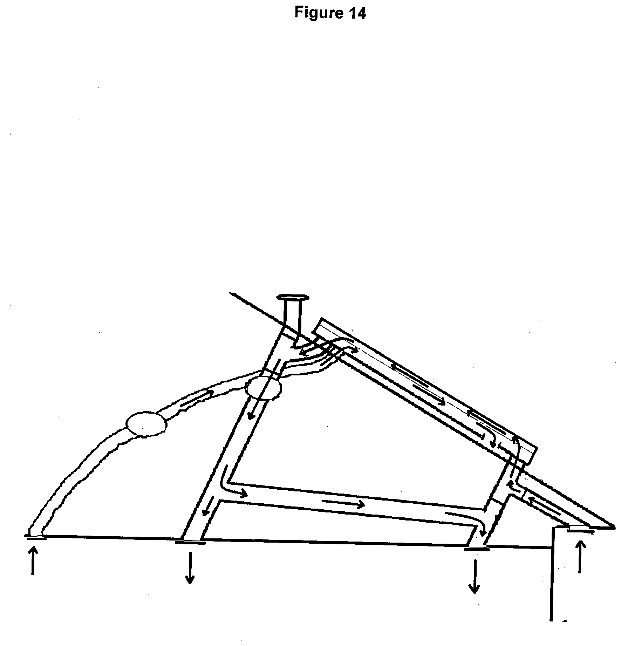

Figure 14 is an illustration of the system 800 operating in 'summer non-solar cooling' mode. In this mode, both fans 815 and 827 are on. Dampers 820 and 824 are open, while dampers 819 and 823 are closed. Fan 815 draws fresh air in from the outside through conduit 816 and the upper channels 806 in collector 802, and into the building interior 804 through conduits 811 and 829. Meanwhile, fan 827 draws precooled stale air in the building interior 804 into conduit 826 and through the lower channels 807 of the collector 802. The heat of the outside air is transferred in collector 802 (which also acts as a heat exchanger) to the precooled air in the lower channels, thus cooling the outside air that is pushed into the building interior. The effect of the system in this mode is to cool the building interior by cooling incoming fresh air using the heat difference with the exiting precooled air.

System 800 may switch between one or more of the above-described modes by any suitable means. In a preferred embodiment, the system is operable to switch automatically between modes based on the sensed conditions in order to achieve the heating or cooling effect desired. The manner in which this may be achieved using temperature sensors, a controller programmable by a user to set one or more desired building interior temperatures, and fan and damper controllers will be evident to the skilled addressee upon reading the above description.

In one embodiment of the invention, the system operates as follows, and comprises temperature sensors positioned inside and outside the building and in one or more of the conduits, and a controller receiving temperature readings from the temperature sensors, a desired temperature setting and is programmed to control the system accordingly. Fan 827 is always off, except when the inside temperature is cooler than the outside temperature and cooling is required, or when the inside temperature is warmer than the solar heated temperature. Fan 815 is always on except when the outside temperature exceeds a pre-defined level. When this happens, fan 815 is off and damper 819 is opened to allow air to escape through exhaust conduit 810.

The system may also include one or more pressure sensors located in the conduits and/or in the building interior and/or outside the building. The pressure sensors may be in communication with the system controller so that the controller can cause the system to switch between modes based on sensed pressures in or proximate the system, for example if the pressures reach or exceed pressure thresholds. The pressure thresholds may be relative to other pressures within the system rather than absolute thresholds.

In some embodiments, the controller may comprise a clock or timer that can operate the system to switch between modes based on time of day. In some embodiments, the system may comprise means for detecting the amount of sunlight incident on the solar collector, such that the system can switch between modes accordingly.

The dampers may operate using any appropriate mechanism. In one embodiment, damper 823 is connected to a pressure sensor so that it opens when air is sucked in to the building interior 804 through doors and windows (or other cavities) and up to the heat source at the collector 802. Damper 823 may close when there is no upwards air pressure on it (for example if the windows and doors of the house are closed). When damper 823 is open, damper 824 is closed and vice versa. Dampers 823 and 824 may be connected to a motorised double diverting branch.

When fan 815 is on, damper 819 closes and damper 823 may also close. The system may therefore be configured to operate the dampers based on the status of the fan.

In order to achieve a balance of flow into and out of a building, dampers may be operable to partly open or close. The system may also be able to take into account loss of air from the building through extractor fans in the kitchen and bathroom, and the like. Suitable air flow sensors may be positioned in the conduits to detect the rate of air flow and communicate with the controller, which is able to control operation of the system accordingly. In addition, the rate at which the fans drive air through their respective conduits may also be controlled by the controller to achieve a balance of air flow into and out of the building.

The system may comprise filters to remove dust and other particulates from the air passing through the system. In one embodiment, one filter is positioned in entry conduit 816 to filter the incoming air, and another filter is positioned in interior conduit 826 to filter incoming stale air from the building interior. Filters may also be present to filter the passive upwards flow of air to the collector 802 in the summer modes. Preferably, the filters will not substantially restrict the flow of air but functions to keep the collector 802 clean. For example the filters may be positioned in the ceiling ducts 814 and 822.

One embodiment of a system according to the invention is shown schematically in Figures 9-14. It will be appreciated that variations on this layout and configuration may be used in other embodiments. For example, additional entry, exhaust and interior conduits may be used, as may additional fans, dampers and collectors. Alternatively, some conduits, fans or dampers of the embodiment described in Figure 9-14 may not be present in some systems.

It will be appreciated that the design of solar collector / heat exchanger 802, such as in the embodiments described with reference to Figures 1-7, increases the effectiveness and efficiency of the solar air heating and cooling system of Figures 9-14.

### Alternative embodiments of the invention

In one alternative embodiment of the invention a honeycomb structure such as described in Canadian patent no. 1082544 may be used to trap heat between the upper channels of the collector and the top panel. However, while the use of the honeycomb structure to mitigate against the problem of re-radiation and natural convection may be useful in some installations, the extra fouling of the top panel and other components of the collector may not be desirable in others.

In one embodiment of the invention, a solar air cooling system is configured with components sufficient for it to operate only in the 'summer solar cooling' or 'solar chimney' mode described above. This may be useful in the tropics to use passive ventilation and natural heat convection to cool a building. A one way damper may be used that is sensitive to the upwards pressure of convection air currents, the presence of which causes it to open. When the system is closed up, another damper would open allowing the collector to cool with outside fresh air.

In some embodiments of the invention, the means for exchanging heat energy with the upper channels comprises means for storing solar heat energy. In a preferred embodiment, the means for storing heat energy is positioned in thermal communication with the lower air channels of the collector. In one embodiment, a layer of phase change materials (PCMs) are positioned in the collector below the lower air channels. PCMs may store heat energy, enabling it to be released at a later time when needed.

In one study it was found that PCMs give a clear boost of heat energy in the time after 4pm for three hours. PCT publication no. WO 85/00212 describes a flat plate, unidirectional solar air heater designed to store PCMs. The PCMs in the present invention store and release heat not only from the sun's energy, but are also boosted by reclaimed air. There will be times when PCMs require to be cooled down in order to solidify and release heat, for example, in the late afternoon/evening for a boost of heat energy. In this case a timer would turn off fan 827 for reclaimed heat and the PCMs would be allowed to fully solidify thereby releasing their heat energy. The PCM storage capacity within the present invention is also very useful for the solar chimney function. When the solar air heater cools down in the evening it would then release heat energy which will extend the upward suction in the building and thereby the cooling time of the solar chimney function. This would allow the building to fully cool down in the evenings.

In some cases there may be a vertical restriction on the height of a surface-mounted solar air collector. In such cases, there may not be room for both a lower air channel and a PCM layer. Instead, the lower layer would either be used for heat recovery (and therefore house lower air channels) or to store heat via PCMs. Other reasons other than height restrictions may also drive the different configuration of the collector layers. In the latter case the two entry and exit openings may be closed off and insulated, or the openings may not be present. Various sequential arrangements of these are possible. In a 25/30mmm height, 950mm x 1800mm channel, for example, it would be possible to store approximately 12mm x 450mm x300mm CSM panels of PCM with a maximum stored energy capacity of approximately 1200 Wh. This would provide beneficial heat during late afternoon / evening in the winter when the PCMS begin to solidify, or cooling in the evening in summer in the case of the 'solar chimney' operation.

In other embodiments of the invention, the system may be combined with other systems capable of utilising solar energy. For example, arrays or modules of photovoltaic (PV) cells may be installed as part of, or in combination with, a solar heating/cooling system according to the invention. For example, on the top panel of the collector may be mounted an array of PV cells. New transparent PV cells may particularly advantageously be used. In building-integrated versions of the invention, the collector may be positioned directly underneath the PV cells. Adding PV capacity may offset running costs and the greenhouse footprint of the system (e.g. powering the fans). Combining a solar air heater with PV cells in this way also reduces the physical footprint of solar energy devices on a building.

If a sufficient current of air flow is exhausted via the solar air heating / cooling system to the exhaust conduits, there is the potential to use the energy of this air current to generate electricity using a wind energy generator. The preferred channel matrix under a transparent wall can of course be up-scaled to form a large area (sloped or vertical) that has applications for commercial buildings, for example, as ventilation in addition to harnessing wind energy in the "chimney effect" to generate electricity.

Unless the context clearly requires otherwise, throughout the description and the claims, the words "comprise", "comprising", and the like, are to be construed in an inclusive sense as opposed to an exclusive or exhaustive sense, that is to say, in the sense of "including, but not limited to".

The entire disclosures of all applications, patents and publications cited above and below, if any, are herein incorporated by reference..

Reference to any prior art in this specification is not, and should not be taken as, an acknowledgement or any form of suggestion that that prior art forms part of the common general knowledge in the field of endeavour in any country in the world.

The invention may also be said broadly to consist in the parts, elements and features referred to or indicated in the specification of the application, individually or collectively, in any or all combinations of two or more of said parts, elements or features.

Where in the foregoing description reference has been made to integers or components having known equivalents thereof, those integers are herein incorporated as if individually set forth.

It should be noted that various changes and modifications to the presently preferred embodiments described herein will be apparent to those skilled in the art. Such changes and modifications may be made without departing from the scope of the invention and without diminishing its attendant advantages. It is therefore intended that such changes and modifications be included within the present invention.

## Claims

1. A solar heat collector (100; 802) for use in a ventilation system (800), the collector (100; 802) comprising:
a plurality of air channels (110, 115; 806, 807);
a top panel (104) positioned above the air channels (110, 115; 806, 807) to define a solar energy absorption space (111), the air channels (110, 115; 806, 807) being in thermal communication with the solar energy absorption space (111); and
means for creating turbulence of air flow inside the air channels (110; 806), **characterised in that** the means for creating turbulence comprises a helical fin (120) extending along each channel (110; 806) in a longitudinal direction and comprises one or more protrusions (121) on an inside surface of the channels (110; 806), the one or more protrusions (121) extending longitudinally along a length of the channels (110; 806).

2. The solar heat collector (100; 802) of claim 1 wherein the air channels (110, 115; 806, 807) comprise a plurality of upper air channels (110; 806) and a plurality of lower air channels (115; 807) configured to exchange heat energy with the plurality of upper heat channels (110; 806), the lower air channels (115; 807) positioned underneath the upper air channels (110; 806) and in thermal communication therewith.

3. A solar heat collector (100; 802) as claimed in claim 2, wherein the upper and lower air channels (110, 115; 806, 807) are configured to channel air in opposing directions.

4. A solar heat collector (100; 802) as claimed in claim 2 or 3, wherein the solar heat collector (100; 802) comprises a sealed housing (101) in which the upper air channels (110; 806) and lower air channels (115; 807) are contained, an upper surface of the housing (101) comprising the top panel (104).

5. A solar air heating/cooling system (800) for a building (801), the system (800) comprising:
the solar heat collector (100; 802) of any one of claims 2 to 4;
a first air exhaust conduit (810) fluidly connecting an upper end of the upper air channels (110; 806) to the outside air;
a first interior air conduit (811) fluidly connecting the upper end of the upper air channels (110; 806) and the building interior (804);
an air entry conduit (816) fluidly connecting a lower end of the upper air channels (110; 806) and the outside air;
means (815) for driving air through the first interior air conduit (811) towards the building interior (804);
first flow control means (819) configured to selectively block the first air exhaust conduit (810); and
second flow control means (820) configured to selectively block the first interior air conduit (811),
wherein the first flow control means (819) is closed when the second flow control means (820) is open, and vice versa.

6. A system (800) as claimed in claim 5, wherein
the system (800) further comprises:
a second interior air conduit (826) fluidly connecting an upper end of the lower air channel (115; 807) and the building interior (804);
a second air exhaust conduit (828) fluidly connecting a lower end of the lower air channel (115; 807) and the outside air; and
means (827) for driving air through the second interior air conduit (826) away from the building interior (804).

7. A system (800) as claimed in any one of claims 5 or 6, wherein the system (800) comprises:
a third interior air conduit (817) fluidly connecting the lower end of the upper air channels (110; 806) and the building interior (804);
third flow control means (824) configured to selectively block the air entry conduit (816); and
fourth flow control means (823) configured to selectively block the third interior air conduit (817),
wherein the third flow control means (824) is closed when the fourth flow control means (823) is open, and vice versa.

8. A system (800) as claimed in any one of claims 5-7, wherein the system (800) comprises a wind energy generator positioned in the first air exhaust conduit (810).

9. A solar-powered ventilation system (800) for ventilating a building (801) comprising:
a solar energy collector (100; 802) according to any one of claims 2-4;
an air exhaust conduit (810) fluidly connected to the upper end of the collector air channels (110; 806);
a first air entry conduit (817) fluidly connecting the lower end of the collector air channels (110; 806) and the building interior (804);
a second air entry conduit (816) fluidly connecting the lower end of the collector air channels (110; 806) to the outside air; and
flow control means (823, 824) configured to selectively block the fluid connection of the first and second air entry conduit (817, 816) to the collector air channels (110; 806).

10. A system (800) as claimed in claim 9, wherein the ventilation system (800) comprises a temperature sensor configured to communicate with the flow control means (823, 824) and to cause the flow control means (823) to block the first air entry conduit (817) when one or more threshold temperatures in the building interior (804) is/are reached.

11. A system (800) as claimed in claims 9 or 10, wherein the system (800) comprises one or more pressure sensors configured to communicate with the flow control means (823, 824) to control the flow control means (823, 824) based on one or more detected pressures in the conduits (810, 816, 817) and/or in the building interior (804).

12. A system (800) as claimed in any one of claims 9-11, wherein the system (800) comprises a wind energy generator positioned in the air exhaust conduit (810).

## Patentansprüche

1. Solar-Wärmekollektor (100; 802) zur Verwendung in einem Ventilationssystem (800), worin der Kollektor (100; 802) umfasst:
mehrere Luftkanäle (110, 115; 806, 807);
ein oberes Paneel (104), das über den Luftkanälen (110, 115; 806, 807) angeordnet ist, um einen Solarenergie-Absorptionsbereich zu definieren (111), worin die Luftkanäle (110, 115; 806, 807) mit dem Solarenergie-Absorptionsbereich (111) in thermischer Verbindung stehen; und
Mittel zur Erzeugung von Turbulenz des Luftstroms in den Luftkanälen (110; 806),
**dadurch gekennzeichnet, dass** die Mittel zur Erzeugung der Turbulenz eine helikale Lamelle (120) umfasst, die sich entlang eines jeden Kanals (110; 806) in einer Längsrichtung erstreckt und ein oder mehrere Vorsprünge (121) an einer Innenseite der Kanäle (110; 806) umfasst, worin sich die ein oder mehreren Vorsprünge (121) längs entlang einer Länge der Kanäle (110; 806) erstrecken.

2. Solar-Wärmekollektor(100; 802) nach Anspruch 1 worin die Luftkanäle (110, 115; 806, 807) mehrere obere Luftkanäle (110; 806) und mehrere untere Luftkanäle (115; 807) umfassen, die ausgestaltet sind, Wärmeenergie mit den mehreren oberen Wärme-Kanälen (110; 806) auszutauschend, worin die unteren Luftkanäle (115; 807) unter den oberen Luftkanälen (110; 806) angeordnet sind und in thermischer Verbindung damit stehen.

3. Solar-Wärmekollektor(100; 802) nach Anspruch 2, worin die oberen und unteren Luftkanäle (110, 115; 806, 807) ausgestaltet sind, Luft in entgegengesetzte Richtungen zu leiten.

4. Solar-Wärmekollektor(100; 802) nach Anspruch 2 oder 3, worin der Solar-Wärmekollektor(100; 802) ein versiegeltes Gehäuse (101) umfasst, in dem die oberen Luftkanäle (110; 806) und unteren Luftkanäle (115; 807) enthalten sind, worin eine obere Oberfläche des Gehäuses (101) das obere Paneel (104) umfasst.

5. Solar Luft-Heiz-/Kühl-System (800) für ein Gebäude (801), worin das System (800) umfasst:
den Solar-Wärmekollektor (100; 802) nach einem der Ansprüche 2 bis 4;
eine erste Abluftleitung (810), die ein oberes Ende der oberen Luftkanäle (110; 806) mit der Umgebungsluft fluid verbindet;
einen ersten inneren Luftkanal (811), der das obere Ende der oberen Luftkanäle (110; 806) und das Gebäudeinnere (804) fluid verbindet;
eine Lufteintritts-Leitung (816), die ein unteres Ende der oberen Luftkanäle (110; 806) und die Umgebungsluft fluid verbindet;
Mittel (815) zum Antreiben von Luft durch den ersten inneren Luftkanal (811) auf das Gebäudeinnere (804) zu;
erste Stromsteuermittel (819), die ausgestaltet sind, selektiv die erste Abluftleitung (810) zu blocken; und
zweite Stromsteuermittel (820), die ausgestaltet sind, selektiv den ersten inneren Luftkanal (811) zu blocken,
worin das erste Stromsteuermittel (819) geschlossen ist, wenn das zweite Stromsteuermittel (820) geöffnet ist und umgekehrt.

6. System (800) nach Anspruch 5, worin das System (800) weiter umfasst:
einen zweiten inneren Luftkanal (826), der ein oberes Ende des unteren Luft-Kanals (115; 807) und das Gebäudeinnere (804) fluid verbindet;
eine zweite Abluftleitung (828), die ein unteres Ende des unteren Luft-Kanals (115; 807) und die Umgebungsluft fluid verbindet; und
Mittel (827) zum Antreiben von Luft durch den zweiten inneren Luftkanal (826) weg von dem Gebäudeinneren (804).

7. System (800) nach einem der Ansprüche 5 oder 6, worin das System (800) umfasst:
einen dritten inneren Luftkanal (817), der das untere Ende der oberen Luftkanäle (110; 806) und das Gebäudeinnere (804) fluid verbindet;
dritte Stromsteuermittel (824), die ausgestaltet sind, selektiv die Lufteintritts-Leitung (816) zu blockieren; und
vierte Stromsteuermittel (823), die ausgestaltet sind, selektiv den dritten inneren Luftkanal (817) zu blockieren;
worin das dritte Stromsteuermittel (824) geschlossen ist, wenn das vierte Stromsteuermittel (823) geöffnet ist und umgekehrt.

8. System (800) nach einem der vorstehenden Ansprüche 5-7, worin das System (800) einen Windenergie-Generator umfasst, der in der ersten Abluftleitung (810) angeordnet ist.

9. Solar-betriebenes Ventilationssystem (800) zur Belüftung eines Gebäudes (801), welches umfasst:
einen Solarenergie-Kollektor (100; 802) nach einem der Ansprüche 2-4;
eine Abluftleitung (810), die mit dem oberen Ende der Kollektor-Luftkanäle (110; 806) fluid verbunden ist;
eine erste Lufteintritts-Leitung (817), die das untere Ende der Luftkanäle (110; 806) und das Gebäudeinnere (804) fluid verbindet;
eine zweite Lufteintritts-Leitung (816), die das untere Ende der Kollektor-Luftkanäle (110; 806) mit der Umgebungsluft fluid verbindet; und
Stromsteuermittel (823, 824), die ausgestaltet sind, selektiv die Fluid-Verbindung der ersten und zweiten Lufteintritts-Leitung (817, 816) zu den Kollektor-Luftkanälen (110; 806) zu blockieren.

10. System (800) nach Anspruch 9, worin das Ventilationssystem (800) einen Temperatursensor umfasst, der ausgestaltet ist mit den Stromsteuermittel (823, 824) in Verbindung zu stehen und zu bewirken, dass das Stromsteuermittel (823) die erste Lufteintritts-Leitung (817) blockiert, wenn ein oder mehrere Schwellentemperaturen in dem Gebäudeinneren (804) erreicht wurden.

11. System (800) nach Anspruch 9 oder 10, worin das System (800) ein oder mehrere Drucksensoren umfasst, die ausgestaltet sind, mit dem Stromsteuermittel (823, 824) in Verbindung zu stehen, um das Stromsteuermittel (823, 824) basierend auf einem oder mehreren erfassten Drücken in den Leitungen (810, 816, 817) und/oder in dem Gebäudeinneren (804) zu steuern.

12. System (800) nach einem der Ansprüche 9-11, worin das System (800) einen Windenergiegenerator umfasst, der in der Abluftleitung (810) angeordnet ist.

## Revendications

1. Collecteur de chaleur solaire (100 ; 802) destiné à être utilisé dans un système de ventilation (800), le collecteur (100 ; 802) comprenant :
une pluralité de canaux d'air (110, 115 ; 806, 807) ;
un panneau supérieur (104) positionné au-dessus des canaux d'air (110, 115 ; 806, 807) afin de définir un espace d'absorption d'énergie solaire (111), les canaux d'air (110, 115 ; 806, 807) étant en communication thermique avec l'espace d'absorption d'énergie solaire (111) ; et
un moyen de création d'une turbulence de flux d'air à l'intérieur des canaux d'air (110; 806),
**caractérisé en ce que** le moyen de création d'une turbulence comprend une pale hélicoïdale (120) qui s'étend le long de chaque canal (110 ; 806) dans une direction longitudinale et qui comprend une ou plusieurs saillies (121) sur une surface intérieure des canaux (110 ; 806), la ou les saillies (121) s'étendant longitudinalement le long des canaux (110 ; 806).

2. Collecteur de chaleur solaire (100 ; 802) selon la revendication 1, dans lequel les canaux d'air (110, 115 ; 806, 807) comprennent une pluralité de canaux d'air supérieurs (118 ; 806) et une pluralité de canaux d'air inférieurs (115 ; 807) configurés pour échanger une énergie thermique avec la pluralité de canaux de chaleur supérieurs (110 ; 806), les canaux d'air inférieurs (115 ; 807) étant positionnés sous les canaux d'air supérieurs (110 ; 806) et en communication thermique avec ceux-ci.

3. Collecteur de chaleur solaire (100 ; 802) selon la revendication 2, dans lequel les canaux d'air supérieurs et inférieurs (110, 115 ; 806, 807) sont configurés pour acheminer l'air dans des directions opposées.

4. Collecteur de chaleur solaire (100 ; 802) selon la revendication 2 ou 3, dans lequel le collecteur de chaleur solaire (100 ; 802) comprend une enceinte fermée (101) dans laquelle les canaux d'air supérieurs (110 ; 806) et les canaux d'air inférieurs (115 ; 807) sont contenus, une surface supérieure de l'enceinte (101) comprenant le panneau supérieur (104).

5. Système de chauffage/refroidissement d'air solaire (800) destiné à un bâtiment (801), le système (800) comprenant :
le collecteur de chaleur solaire (100 ; 802) selon l'une quelconque des revendications 2 à 4 ;
un premier conduit d'évacuation d'air (810) qui relie de manière fluide une extrémité supérieure des canaux d'air supérieurs (110 ; 806) à l'air extérieur ;
un premier conduit d'air intérieur (811) qui relie de manière fluide l'extrémité supérieure des canaux d'air supérieurs (110 ; 806) et l'intérieur du bâtiment (804) ;
un conduit d'entrée d'air (816) qui relie de manière fluide une extrémité inférieure des canaux d'air supérieurs (110 ; 806) et l'air extérieur ;
un moyen (815) destiné à conduire l'air dans le premier conduit d'air intérieur (811) vers l'intérieur du bâtiment (804) ;
un premier moyen de régulation de débit (819) configuré pour bloquer sélectivement le premier conduit d'évacuation d'air (810) ; et
un second moyen de régulation de débit (820) configuré pour bloquer sélectivement le premier conduit d'air intérieur (811),
dans lequel le premier moyen de régulation de débit (819) est fermé lorsque le second moyen de régulation de débit (820) est ouvert, et inversement.

6. Système (800) selon la revendication 5, dans lequel
le système (800) comprend en outre :
un second conduit d'air intérieur (826) qui relie de manière fluide une extrémité supérieure du canal d'air inférieur (115 ; 807) et l'intérieur du bâtiment (804) ;
un second conduit d'évacuation d'air (828) qui relie de manière fluide une extrémité inférieure du canal d'air inférieur (115 ; 807) et l'air extérieur ; et
un moyen (827) destiné à conduire l'air dans le second conduit d'air intérieur (826) à l'écart de l'intérieur du bâtiment (804).

7. Système (800) selon l'une quelconque des revendications 5 ou 6, dans lequel le système (800) comprend :
un troisième conduit d'air intérieur (817) qui relie de manière fluide l'extrémité inférieure des canaux d'air supérieurs (110 ; 806) et l'intérieur du bâtiment (804) ;
un troisième moyen de régulation de débit (824) configuré pour bloquer sélectivement le conduit d'entrée d'air (816) ; et
un quatrième moyen de régulation de débit (823) configuré pour bloquer sélectivement le troisième conduit d'air intérieur (817),
dans lequel le troisième moyen de régulation de débit (824) est fermé lorsque le quatrième moyen de régulation de débit (823) est ouvert, et inversement.

8. Système (800) selon l'une quelconque des revendications 5 à 7, dans lequel le système (800) comprend un générateur d'énergie éolienne positionné dans le premier conduit d'évacuation d'air (810).

9. Système de ventilation solaire (800) destiné à ventiler un bâtiment (801) comprenant :
un collecteur d'énergie solaire (100 ; 802) selon l'une quelconque des revendications 2 à4;
un conduit d'évacuation d'air (810) relié de manière fluide à l'extrémité supérieure des canaux d'air du collecteur (110 ; 806) ;
un premier conduit d'entrée d'air (817) qui relie de manière fluide l'extrémité inférieure des canaux d'air du collecteur (110 ; 806) et l'intérieur du bâtiment (804) ;
un second conduit d'entrée d'air (816) qui relie de manière fluide l'extrémité inférieure des canaux d'air du collecteur (110 ; 806) à l'air extérieur ; et
un moyen de régulation du débit (823, 824) configuré pour bloquer sélectivement la liaison de fluide entre le premier et le second conduits d'entrée d'air (817, 816) et les canaux d'air du collecteur (110 ; 806).

10. Système (800) selon la revendication 9, dans lequel le système de ventilation (800) comprend un capteur de température configuré pour communiquer avec le moyen de régulation de débit (823, 824) et pour permettre au moyen de régulation de débit (823) de bloquer le premier conduit d'entrée d'air (817) lorsqu'une ou plusieurs température(s) de seuil à l'intérieur du bâtiment (804) est/sont atteinte(s).

11. Système (800) selon la revendication 9 ou 10, dans lequel le système (800) comprend un ou plusieurs pressostat(s) configuré(s) pour communiquer avec le moyen de régulation de débit (823, 824) afin de contrôler le moyen de régulation de débit (823, 824) sur la base d'une ou plusieurs pression(s) détectée(s) dans les conduits (810, 816, 817) et/ou à l'intérieur du bâtiment (804).

12. Système (800) selon l'une quelconque des revendications 9 à 11, dans lequel le système (800) comprend un générateur d'énergie éolienne positionné dans le conduit d'évacuation d'air (810).
